# EUROPÄISCHE PATENTANMELDUNG

(11) **EP 0 558 901 A1**
(43) Veröffentlichungstag der Anmeldung: **08.09.1993**
(21) Anmeldenummer: 93100841.1
(22) Anmeldetag: 21.01.1993
(51) Int. Cl.: B29C 41/18, B29C 41/08

(54) **Verfahren zum Herstellen einer Kunststoffhaut**

(30) Priorität: 29.01.1992 DE 4202354
(71) Anmelder: YMOS AKTIENGESELLSCHAFT Industrieprodukte, D-63179 Obertshausen (DE)
(72) Erfinder: Christoph, Erich M., D-6053 Obertshausen 2 (DE); bartels, Hermann A., D-6052 Mühlheim (DE)
(74) Vertreter: Schieferdecker, Lutz, Dipl.-Ing.

(57) **Zusammenfassung**

Die Erfindung betrifft ein Verfahren zum Herstellen einer Kunststoffhaut (1), die insbesondere als Deckschicht eines in weiteren Arbeitsschritten herzustellenden, mehrlagigen Gegenstandes dient,
a) wobei Kunststoffpulver (11) in einer Produktionsform (2) erwärmt wird,
b) in dieser als dünne Kunststoffschicht (13) boden- und/ oder wandseitig anschmilzt und
c) bei weiterer Wärmezufuhr aufschmilzt und
d) schließlich nach dem Abkühlen als Kunststoffhaut (1) erstarrt.

Der Kern der Erfindung besteht darin, daß
e) Lack (5) auf die Innenseite (4) der Produktionsform (2) aufgebracht wird,
f) ehe das die Kunststoffhaut (1) bildende Kunststoffpulver (11) in die Produktionsform (2) gefüllt wird.

## Beschreibung

Die Erfindung betrifft ein Verfahren zum Herstellen einer Kunststoffhaut, die insbesondere als Deckschicht eines in weiteren Arbeitsschritten herzustellenden, mehrlagigen Gegenstandes dient. Die Herstellung der Kunststoffhaut erfolgt dabei entsprechend den Merkmalen des Oberbegriffes des Anspruches 1.

Ein Verfahren der genannten Art ist aus der DE 34 17 727 C2 bekannt. Nach diesem Verfahren wird eine zunächst offene Produktionsform vorgewärmt, sodann auf einen Kunststoffpulver enthaltenden Behälter aufgesetzt und mit diesem dicht verbunden. Ferner werden der Behälter und die aufgesetzte Produktionsform miteinander verschwenkt und gerüttelt, so daß das Kunststoffpulver nicht nur aus dem Behälter auf die Innenseite der Produktionsform fällt, sondern auch dort sicher und zuverlässig in hinterschnittene Bereiche gelangt. Aufgrund der Temperatur der Produktionsform schmilzt Kunststoffpulver auf der Innenseite der Produktionsform als dünne Schicht in einer wandnahen Lage und bildet nach dem Abheben der Produktionsform von dem Behälter und nach dem Abkühlen und Entformen eine dünne Kunststoffhaut. Diese Kunststoffhaut dient sodann als äußere Schicht eines mehrlagigen Gegenstandes, der in weiteren, hier nicht interessierenden Arbeitsschritten hergestellt wird.

Der Erfindung liegt das Problem zugrunde, das bekannte Verfahren zu verbessern und für neue Anwendungsmöglichkeiten zu erschließen.

Zur Lösung dieses Problems sieht die Erfindung vor, daß Lack auf die Innenseite der Produktionsform aufgebracht wird, ehe das die Kunststoffhaut bildende Kunststoffpulver in die Produktionsform gefüllt wird. Während des Anschmelzens bzw. Aufschmelzens des Kunststoffpulvers verbindet sich dieses mit dem auf dieselbe Temperatur erwärmten Lack und bildet schließlich nach dem Abkühlen und Erstarren die sichtbare Oberfläche der fertigen Kunststoffhaut. Dabei wird zweckmäßigerweise ein Lack auf Polyvinylchlorid-Basis (PVC-Basis) für eine Kunststoffhaut verwendet, zu deren Herstellung ein Kunststoffpulver auf Polyvinylchlorid-Basis (PVC) dient. Entsprechend findet ein Polyurethan-Lack Verwendung, wenn die herzustellende Kunststoffhaut aus einem Kunststoffpulver gefertigt wird, das in erster Linie aus Polypropylen (PP) oder aus thermoplastischem Polyurethan (TPU) besteht. Der jeweilige Lack und der Grundwerkstoff der herzustellenden Kunststoffhaut sind also aufeinander abzustimmen.

Bei Anwendung dieses Verfahrens entsteht eine fertig lackierte Kunststoffhaut in der erwünschten Farbe und gegebenenfalls auch mehrfarbig, wenn in Weiterbildung der Erfindung mit Masken zum Abdecken bestimmter Bereiche bzw. gleichzeitig mit Lacken in verschiedenen Farben gearbeitet wird.

In Abhängigkeit von den Eigenschaften des verwendeten Lackes und/oder Kunststoffpulvers ist es unter Umständen zweckmäßig, zuvor noch ein Trennmittel auf die Innenseite der Produktionsform aufzubringen.

In Weiterbildung der Erfindung ist es schließlich vorteilhaft, wenn die Verfahrensschritte derart gesteuert werden, daß die dünne, angeschmolzene Kunststoffschicht nach Beendigung der Wärmezufuhr und nach dem Entleeren der Produktionsform allein aufgrund der in der Masse der Produktionsform gespeicherten Wärme aufschmilzt. Gegebenenfalls kann auch zusätzlich von außen Wärme zugeführt werden, sofern dies erforderlich sein sollte.

Weitere Vorteile und zweckmäßige Ausgestaltungen der Erfindung gehen aus Unteransprüchen im Zusammenhang mit der Beschreibung und der Zeichnung hervor.

Die Erfindung wird nachstehend anhand von Ausführungsbeispielen unter Bezugnahme auf die Zeichnung näher erläutert. Dabei zeigen:
- Fig. 1:: schematisch sowie im Schnitt eine Produktionsform;
- Fig. 2:: schematisch sowie im Schnitt eine Produktionsform mit Trennmittel;
- Fig. 3:: eine Produktionsform wie in den Figuren 1 und 2 mit Trennmittel und mit Lack sowie mit einer bei Bedarf verwendbaren Maske;
- Fig. 4:: eine Produktionsform mit Trennmittel und mit Lack während der Wärmezufuhr;
- Fig. 5:: schematisch sowie im Schnitt die Produktionsform mit Trennmittel und mit Lack nach dem Aufsetzen auf einen schwenkbar gelagerten Behälter, der Kunststoffpulver enthält;
- Fig. 6:: eine Ansicht wie in Fig. 5 nach dem Schwenken von Produktionsform und Behälter;
- Fig. 7:: schematisch und im Schnitt die Produktionsform mit einer dünnen, angeschmolzenen Kunststoffschicht während ihres Aufschmelzens;
- Fig. 8:: schematisch und im Schnitt die Produktionsform mit der Kunststoffschicht beim Erstarren und
- Fig. 9:: schematisch und im Schnitt die Kunststoffhaut nach der Entnahme aus der Produktionsform.

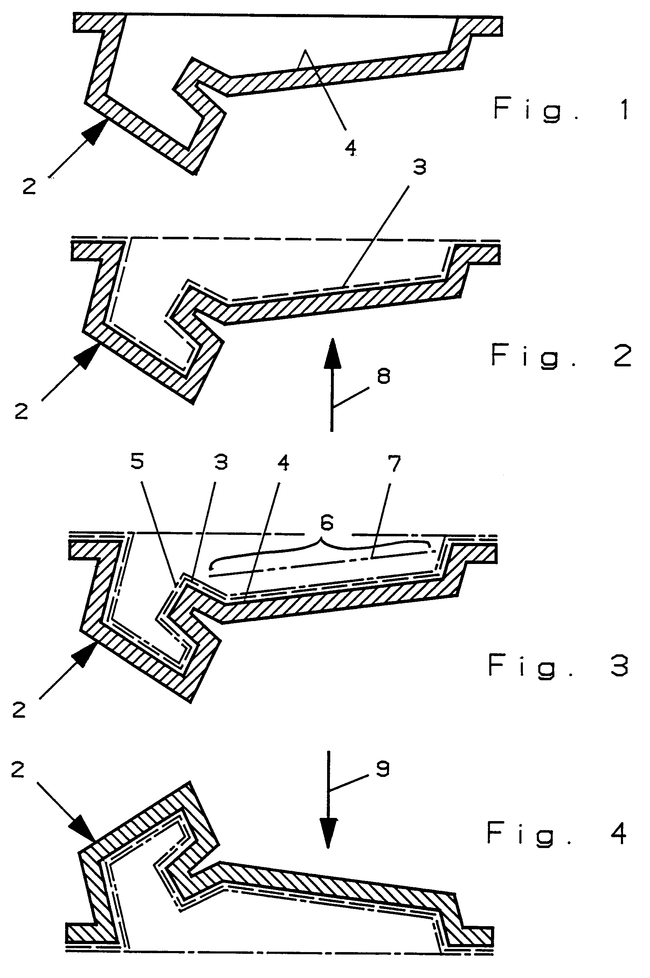

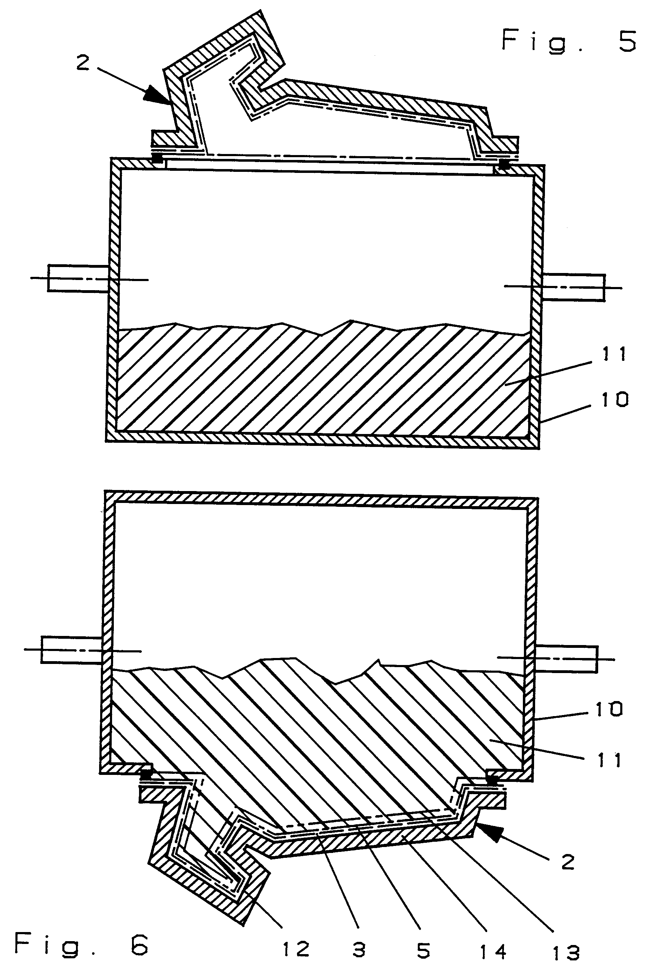

Zum Herstellen einer in Fig. 9 nur im Schnitt sowie schematisch dargestellten Kunststoffhaut 1, die z.B. als Deckschicht eines Kraftfahrzeuginnenteiles wie einer Armaturenverkleidung, einer Mittelkonsole oder dgl. verwendet werden kann, dient eine Produktionsform 2 gemäß der schematisch sowie im Schnitt wiedergegebenen Darstellung in Fig. 1. Sofern es aufgrund der für die Herstellung der Kunststoffhaut 1 benutzten Werkstoffe erforderlich ist, wird ein Trennmittel 3 in einem ersten Verfahrensschritt gemäß Fig. 2 auf die Innenseite 4 der Produktionsform 2 aufgebracht. Bei diesem Trennmittel kann es sich z.B. um Dispersionen auf Wachsbasis handeln.

Im nächsten Verfahrensschritt wird Lack 5 auf die Innenseite 4 der zunächst noch offenen Produktionsform 2 aufgegebracht. Dies geschieht durch Aufsprühen oder in sonstiger, grundsätzlich bekannter Weise. Einzelne Bereiche 6 der Innenseite 4 der Produktionsform 2 können dabei durch eine Maske 7 abgedeckt sein, zwingend notwendig ist dies jedoch nicht. Eine oder mehrere Masken 7 finden Verwendung, wenn nicht die gesamte Innenseite 4 der Produktionsform 2 mit einer Lackschicht versehen werden soll, weil z.B. bestimmte Bereiche 6 vollkommen lackfrei bleiben sollen oder weil der bzw. die Bereiche 6 mit andersfarbigem Lack oder mit farbfarblosem Lack versehen werden sollen. Masken 7 dienen somit in erster Linie zur Herstellung von mehrfarbigen Endprodukten.

Bereits vor dem Lackauftrag kann die Produktionsform 2 vorgewärmt werden, sofern dies im Einzelfall zweckmäßig ist. Die Wärmezufuhr ist in Fig. 2 mit Hilfe des Pfeiles 8 schematisch dargestellt. In einem solchen Fall wird die Produktionsform 2 auf eine Temperatur von 40°C bis 95°C, vorzugsweise auf 80°C vorgewärmt. Eine derartige Erwärmung kann z.B. entfallen, wenn die Temperatur der Produktionsform 2 während des gesamten Herstellungsverfahrens nicht unter eine bestimmte Mindesttemperatur absinkt.

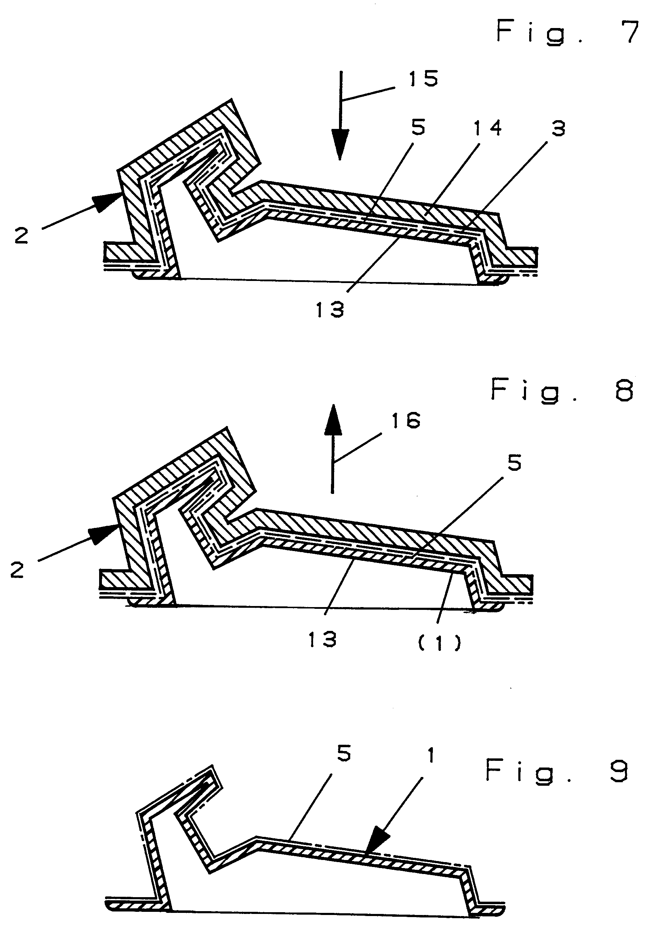

Beim nächsten Verfahrensschritt nach dem Lackauftrag wird die Produktionsform 2 gemäß Fig. 4 auf eine Temperatur von 200°C bis 240°C, vorzugsweise auf eine Temperatur von 230°C erwärmt. Die Zufuhr der Wärme ist in Fig. 4 mit Hilfe des Pfeiles 9 schematisch angedeutet.

Sodann wird die Produktionsform 2 dicht auf einen schwenkbar gelagerten Behälter 10 aufgesetzt und mit diesem verbunden. Fig. 5 gibt diesen Verfahrensschritt schematisch an.

Gemäß Fig. 6 wird der Behälter 10 mit der Produktionsform 2 verschwenkt, so daß in dem Behälter 10 befindliches Kunststoffpulver 11 in die Produktionsform 2 gelangt und diese vollständig ausfüllt. Durch mehrfaches Schwenken und gegebenenfalls durch Rütteln von Behälter 10 und Produktionsform 2 gelangt das Kunststoffpulver 11 auch in hinterschnittene Bereiche 12 der Produktionsform 2 und legt sich überall an deren Innenseite 4 an.

Aufgrund der Temperatur der Produktionsform 2 schmilzt Kunststoffpulver 11 in einer wandnahen Lage als dünne Kunststoffschicht 13 an. Dabei bleiben das Trennmittel 3 und der Lack 5 zwischen der Kunststoffschicht 13 und der Wand 14 der Produktionsform 2 erhalten.

Sobald ausreichend Kunststoffpulver 11 als Kunststoffschicht 13 angeschmolzen ist, wird das nicht angeschmolzene Kunststoffpulver 11 aus der Produktionsform 2 ausgeleert. Hierzu werden der Behälter 10 und die Produktionsform 2 aus der Stellung gemäß Fig. 6 wieder in die Stellung gemäß Fig. 5 geschwenkt und sodann voneinander getrennt. Die Situation nach der Trennung ist in Fig. 7 dargestellt.

Durch weitere Wärmezufuhr schmilzt die angeschmolzene Kunststoffschicht 13 in der Produktionsform 2 nunmehr völlig auf. Diese weitere, zuzuführende Wärme kann ausschließlich von der in der Masse der Produktionsform 2 gespeicherten Wärme stammen oder zusätzlich von außen gemäß dem Pfeil 15 in Fig. 7 zugeführt werden.

Sobald die Kunststoffschicht 13 vollständig aufgeschmolzen ist und sich mit dem Lack 5 verbunden hat, werden die Produktionsform 2 unmittelbar und die aufgeschmolzene Kunststoffschicht 13 mittelbar und/oder unmittelbar abgekühlt. Dies verdeutlicht der Pfeil 16 in Fig. 8. Hierbei erstarrt die aufgeschmolzene Kunststoffschicht 13, so daß sie schließlich als mit Lack 5 versehene Kunststoffhaut 1 der Produktionsform 2 entnommen werden kann. Die fertiggestellte Kunststoffhaut 1 ist entsprechend in Fig. 9 dargestellt.

Sofern die Produktionsform 2 für die Entnahme der Kunststoffhaut 1 auf eine nicht zu niedrig liegende Entnahmetemperatur abgekühlt wird, können das Trennmittel 3 und/oder der Lack 5 unmittelbar auf die Innenseite 4 der Produktionsform 2 aufgebracht werden, ohne daß die Produktionsform 2 vorgewärmt wird.

Die Temperatursteuerung der Produktionsform 2 kann auch beim Erwärmen vor dem Lackauftrag bzw. nach dem Entleeren des Kunststoffpulvers 11 noch modifiziert werden. Zweckmäßig ist eine Temperatursteuerung derart, daß die Erwärmung der Produktionsform 2 nach dem Lackauftrag bis zum Erreichen der höchsten Temperatur innerhalb von zwei bis drei Minuten, vorzugsweise innerhalb von 2,5 Minuten erfolgt.

Zum Abkühlen der Produktionsform 2 und der Kunststoffschicht 13 wird die Rückseite der Produktionsform 2 bis zum Erstarren der aufgeschmolzenen Kunststoffschicht 13 durch Besprühen mit einem Kühlmedium, vorzugsweise mit Hilfe von Wasser vorgekühlt. Die vollständige Abkühlung der Kunststoffschicht 13 mit der auf ihr befindlichen Lackschicht erfolgt in einem Wasserbad bis zu einer Entnahmetemperatur von 20°C bis 50°C, vorzugsweise von 40°C.

Als Lack 5 dient zweckmäßigerweise ein Lack auf Polyvinylchlorid-Basis, wenn auch das für die Herstellung der Kunststoffhaut 1 verwendete Kunststoffpulver 11 in erster Linie aus Polyvinylchlorid besteht. Lacke auf PVC-Basis sind z.B. als PVC-Plastisole in verschiedener Form bekannt und im Handel erhältlich.

Aber auch Polyurethan-Lacke können verwendet werden, insbesondere wenn das Kunststoffpulver 11 in erster Linie aus Polypropylen (PP) oder aus thermoplastischem Polyurethan (TPU) besteht. Diese Kunststoffe können Polyvinylchlorid (PVC) ersetzen, sie besitzen aber den Nachteil, daß sie nicht lichtecht sind und/oder daß aus ihnen hergestellte Gegenstände keine angenehm anzufassende Oberfläche besitzen.

Hier dient der Lack also auch dazu, die notwendige Lichtechtheit herzustellen und somit die Kunststoffhaut zu schützen bzw. ihr eine angenehme Griffigkeit zu verleihen.

Es ist ferner grundsätzlich auch bekannt, Teile aus den genannten Kunststoffen nachträglich zu lackieren. Dies erfordert aber nicht nur einen besonderen Arbeitsgang, sondern es gehen bei nachträglicher Lackierung auch erwünschte Unebenheiten wie Narbungen in der Oberfläche des herzustellenden Teiles mehr oder weniger verloren. Durch die nachträgliche Lackierung erfolgt eine Einebnung der z.B. genarbten Oberfläche. Bei Anwendung des beschriebenen Verfahrens bleiben im Gegensatz dazu alle erwünschten Unebenheiten in der sichtbaren Oberfläche in vollem Umfang erhalten.

Die Temperatursteuerung des Verfahrens kann verschieden gestaltet werden. So ist es möglich, vor jeglicher Erwärmung der Produktionsform 2 den Lack 5 auf deren Innenseite aufzubringen. Die Produktionsform 2 kann aber auch vor dem Lackauftrag vorgewärmt oder gegebenenfalls sogar bis auf ihre höchste Arbeitstemperatur erwärmt werden. Schließlich ist es möglich, zwecks Verkürzung der einzelnen Herstellungsschritte, den Lack 5 während des Erwärmens der Produktionsform 2 aufzutragen und/oder diese auch während des Füllens mit Kunststoffpulver 11 zu erwärmen. Das Ziel hierbei ist es, möglichst kurze Arbeitszyklen zu erreichen. Die Erfindung kann daher in mannigfacher Weise variiert werden, ohne von dem grundsätzlichen Erfindungsgedanken abzuweichen.

## Patentansprüche

1. Verfahren zum Herstellen einer Kunststoffhaut (1), die insbesondere als Deckschicht eines in weiteren Arbeitsschritten herzustellenden, mehrlagigen Gegenstandes dient,
a) wobei Kunststoffpulver (11) in einer Produktionsform (2) erwärmt wird,
b) in dieser als dünne Kunststoffschicht (13) boden- und/ oder wandseitig anschmilzt und
c) bei weiterer Wärmezufuhr aufschmilzt und
d) schließlich nach dem Abkühlen als Kunststoffhaut (1) erstarrt
dadurch gekennzeichnet, daß
e) Lack (5) auf die Innenseite (4) der Produktionsform (2) aufgebracht wird,
f) ehe das die Kunststoffhaut (1) bildende Kunststoffpulver (11) in die Produktionsform (2) gefüllt wird.

2. Verfahren nach Anspruch 1, dadurch gekennzeichnet, daß ein Trennmittel (3) vor dem Aufbringen des Lackes (5) auf die Innenseite (4) der Produktionsform (2) aufgebracht wird.

3. Verfahren nach einem oder mehreren der vorhergehenden Ansprüche, dadurch gekennzeichnet, daß die Produktionsform (2) vor dem Lackauftrag und/oder vor dem Aufbringen des Trennmittels (3) vorgewärmt wird.

4. Verfahren nach einem oder mehreren der vorhergehenden Ansprüche, dadurch gekennzeichnet, daß das Vorwärmen auf eine Temperatur von 40°C bis 95°C, vorzugsweise auf 80°C erfolgt.

5. Verfahren nach einem oder mehreren der vorhergehenden Ansprüche, dadurch gekennzeichnet, daß die Produktionsform (2) nach dem Auftragen des Lackes (5) und vor dem Einfüllen des Kunststoffpulvers (11) auf eine Temperatur von 200°C bis 240°C, vorzugsweise auf eine Temperatur von 230°C erwärmt wird.

6. Verfahren nach einem oder mehreren der vorhergehenden Ansprüche, dadurch gekennzeichnet, daß die Produktionsform (2) vor dem Auftragen des Lackes (5) auf die höchste während des Herstellungsverfahrens auftretende Temperatur erwärmt wird.

7. Verfahren nach einem oder mehreren der vorhergehenden Ansprüche, dadurch gekennzeichnet, daß der Lackauftrag auf die Innenseite (4) der Produktionsform (2) bei einer Temperatur erfolgt, die der Entnahmetemperatur der Kunststoffhaut (1) aus der Produktionsform (2) entspricht.

8. Verfahren nach einem oder mehreren der vorhergehenden Ansprüche, dadurch gekennzeichnet, daß eine Produktionsform (2) mit einer derartigen Masse verwendet wird, daß die dünne, angeschmolzene Kunststoffschicht (13) nach Beendigung der Wärmezufuhr und nach dem Entleeren der Produktionsform (2) allein aufgrund der in der Masse der Produktionsform (2) gespeicherten Wärme aufschmilzt.

9. Verfahren nach einem oder mehreren der vorhergehenden Ansprüche, dadurch gekennzeichnet, daß die dünne, angeschmolzene Kunststoffschicht (13) nach dem Entleeren der Produktionsform (2) aufgrund der in der Masse der Produktionsform (2) gespeicherten Wärme und durch zusätzlich von außen zugeführte Wärme (15) aufschmilzt.

10. Verfahren nach einem oder mehreren der vorhergehenden Ansprüche, gekennzeichnet durch eine Temperatursteuerung nach dem Aufbringen des Lackes (5) derart, daß das Aufheizen der Produktionsform (2) innerhalb von zwei bis drei Minuten, vorzugsweise innerhalb von 2,5 Minuten erfolgt.

11. Verfahren nach einem oder mehreren der vorhergehenden Ansprüche, dadurch gekennzeichnet, daß ein Polyurethan-Lack (5) in Form einer Dispersion aufgebracht/aufgesprüht wird.

12. Verfahren nach einem oder mehreren der vorhergehenden Ansprüche, dadurch gekennzeichnet, daß der Polyurethan-Lack (5) als lösungsmittelhaltiger Mehrkomponentenlack aufgebracht/aufgesprüht wird.

13. Verfahren nach einem oder mehreren der vorhergehenden Ansprüche, dadurch gekennzeichnet, daß der Lack (5) aus einem Polyvinylchlorid-Plastisol besteht.

14. Verfahren nach einem oder mehreren der vorhergehenden Ansprüche, dadurch gekennzeichnet, daß die Kunststoffschicht (13) mit der auf ihr befindlichen Lackschicht vor der Entnahme aus der Produktionsform (2) in einem Wasserbad auf eine Entnahmetemperatur von 20°C bis 50°C, vorzugsweise auf 40°C abgekühlt wird.

15. Verfahren nach einem oder mehreren der vorhergehenden Ansprüche, dadurch gekennzeichnet, daß die offene Produktionsform (2) zum Einfüllen des Kunststoffpulvers (11) mit einem das Kunststoffpulver (11) enthaltenden Behälter (10) verbunden wird, daß die mit dem Behälter (10) verbundene Produktionsform (2) während des Arbeitsschrittes "Anschmelzen einer dünnen Kunststoffschicht (13)" gegebenenfalls mehrmals geschwenkt und gegebenenfalls gerüttelt wird, ehe sie wieder von dem Behälter (10) getrennt wird, wenn die Kunststoffschicht (13) auf der Lackschicht angeschmolzen ist.

16. Verfahren nach einem oder mehreren der vorhergehenden Ansprüche, gekennzeichnet durch die Verwendung von mindestens einer Maske (7) zur räumlichen Begrenzung des aufzutragenden Lackes (5) auf der Innenseite (4) der Produktionsform (2).

17. Verfahren nach einem oder mehreren der vorhergehenden Ansprüche, dadurch gekennzeichnet, daß verschiedenfarbige Lacke (5) und/oder farbloser Lack (5) mit Hilfe von mindestens einer Maske (7) räumlich begrenzt auf der Innenseite (4) der Produktionsform (2) aufgetragen werden.

18. Verfahren nach einem oder mehreren der vorhergehenden Ansprüche, gekennzeichnet durch folgende Verfahrensschritte:
a) der Lack (5) wird auf die Innenseite (4) der zunächst offenen Produktionsform (2) aufgebracht,
b) die Produktionsform (2) wird sodann erwärmt,
c) die Produktionsform (2) wird sodann mit Kunststoffpulver (11) gefüllt,
d) welches sodann in einer wandnahen Lage als dünne Kunststoffschicht (13) anschmilzt,
e) das nicht angeschmolzene Kunststoffpulver (13) wird sodann aus der Produktionsform (2) ausgeleert,
f) woraufhin wieder Wärme der dünnen, angeschmolzenen Kunststoffschicht (13) zugeführt wird, so daß sie in der Produktionsform (2) aufschmilzt,
g) sodann werden die Produktionsform (2) unmittelbar und die aufgeschmolzene Kunststoffschicht (13) mittelbar und/oder unmittelbar abgekühlt,
h) wobei die aufgeschmolzene Kunststoffschicht (13) erstarrt und
i) woraufhin schließlich die erstarrte Kunststoffschicht (13) als Kunststoffhaut (1) der Produktionsform (2) entnommen wird.
